# DEMANDE DE BREVET EUROPEEN

(11) **EP 4 579 521 A1**
(43) Date de publication de la demande: **02.07.2025**
(21) Numéro de dépôt: 24221661.2
(22) Date de dépôt: 19.12.2024
(51) Int. Cl.: G06K 19/073

(54) **CARTE ÉQUIPÉE D'UNE INTERFACE SANS CONTACT ET PROCÉDÉ DE FABRICATION DE LA CARTE ÉQUIPÉE D'UNE INTERFACE SANS CONTACT**

(30) Priorité: 26.12.2023 FR 2315305
(71) Demandeur: Idemia France, 92400 Courbevoie (FR)
(72) Inventeur: DONNELLY, Scott, 92400 Courbevoie (FR); VISSEICHE, Thomas, 92400 Courbevoie (FR)
(74) Mandataire: Idemia

(57) **Abrégé**

La présente invention concerne une carte équipée d'une interface sans contact. La carte comporte un dispositif d'activation, un microprocesseur et une antenne. Le dispositif d'activation comporte un premier et un deuxième composant conducteur, et un espaceur. Le microprocesseur et l'antenne sont chacun connectés au premier composant conducteur ou au deuxième composant conducteur. Une cavité de la carte présente un état normal et un état déformé, et au moins une partie de la cavité est configurée pour séparer le premier composant du deuxième composant à l'état normal. Lorsqu'une force externe au dispositif d'activation est appliquée sur le dispositif d'activation pour déplacer le premier composant en direction du deuxième composant, la cavité passe de l'état normal à l'état déformé, et une partie du premier composant conducteur est configurée pour pénétrer dans la cavité, en formant ainsi un contact électrique avec le deuxième composant conducteur.

## Description

### DOMAINE TECHNIQUE

La présente invention se rapporte d'une façon générale au domaine des cartes équipées d'une fonctionnalité sans contact et, plus particulièrement, à une carte équipée d'une interface sans contact et à un procédé de fabrication de la carte.

### ÉTAT DE LA TECHNIQUE ANTÉRIEURE

Les cartes à puce servent de dispositifs de stockage de données qui trouvent des applications diverses notamment dans le contrôle d'accès, les paiements et l'identification. Chaque carte à puce incorpore un circuit intégré (ci-après "CI") qui permet à la carte de stocker et de traiter des données. Ce CI comporte un microcontrôleur ou un processeur similaire ainsi qu'une mémoire.

Il existe différents types de cartes à puce, notamment des cartes équipées d'une interface sans contact uniquement, des cartes équipées d'une interface à contact uniquement, et des cartes à double interface équipées de capacités aussi bien à contact que sans contact.

Une préoccupation courante concernant les communications sans contact est le risque que des personnes non autorisées utilisent du matériel de type scanner pour extraire illicitement de la carte des renseignements personnels sur son détenteur.

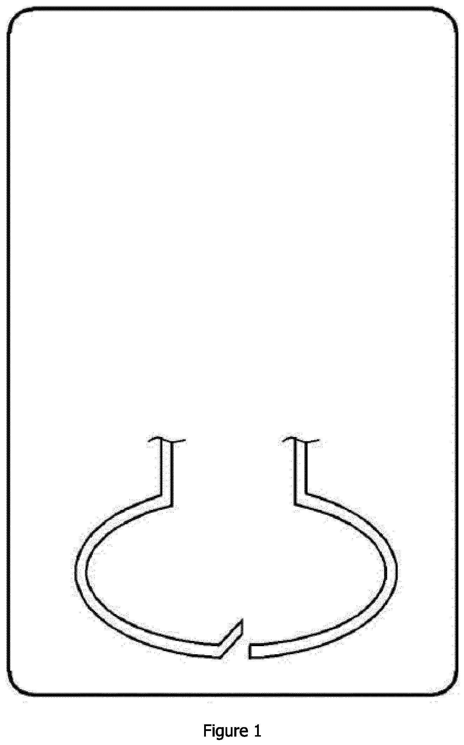

Il existe divers brevets et produits visant à répondre à ce problème. À titre d'exemple, la demande de brevet des États-Unis d'Amérique, publiée sous le n° US2009/0039149A1, décrit une carte sans contact qui comporte un interrupteur. Une fois activé, cet interrupteur crée un circuit ouvert au sein de l'antenne de la carte de manière à désactiver la fonction sans contact de la carte. La figure 1 illustre cette antenne.

Cette approche présente toutefois certains inconvénients. Elle nécessite l'utilisation d'un interrupteur normalement fermé qui soit robuste et toujours en mesure, une fois fermé, de créer efficacement un court-circuit au sein de l'antenne, et peut nécessiter une source d'énergie locale pour l'ouverture et la fermeture de l'interrupteur. Cela peut entraîner une conception complexe et encombrante.

### RÉSUMÉ

La présente invention cherche à pallier l'inconvénient de la technologie existante évoqué ci-dessus. Sauf indication contraire, le terme "ou" s'entend dans le présent document comme "et/ou".

Selon un premier aspect, la présente invention concerne une carte équipée d'une interface sans contact. La carte comporte un microprocesseur, une antenne et un dispositif d'activation.

La carte peut être soit une carte sans contact, soit une carte à double interface. À titre d'exemples de la carte, on peut citer les cartes de transaction (comme les cartes de crédit et de débit), les cartes de transport (utilisées dans les systèmes de transport en commun), les cartes d'accès (comme les cartes de bibliothèque et les cartes de télépéage utilisées dans les systèmes de péage d'autoroutes et de ponts), les cartes EMV (l'acronyme "EMV" signifie "Europay, Mastercard et Visa"), parmi d'autres.

L'interface sans contact de la carte peut être intégrée avec une ou plusieurs technologies de télécommunication, notamment mais pas exclusivement, l'identification radiofréquence (ci-après "RFID"), la technologie dite Wireless Fidelity (ci-après "Wi-Fi"), la technologie Bluetooth à faible consommation d'énergie (ci-après "BLE"), Zigbee, et Z-wave.

L'expression "carte compatible RFID" s'entend dans le présent document comme toute carte qui communique au moyen d'une technologie radiofréquence. Il peut s'agir d'une carte RFID ou d'une carte à communication en champ proche (ci-après "NFC").

L'interface sans contact est adaptable à toute version des protocoles de télécommunication associés aux technologies évoquées ci-dessus. À titre d'exemple, dans le cas d'une carte NFC, celle-ci peut être compatible avec une version quelconque de la norme ISO/IEC 14443, 15693 ou 18092. Dans le cas d'une carte compatible Wi-Fi, celle-ci peut fonctionner avec une version quelconque de la norme IEEE 802.11.

À titre d'exemple, l'expression "dispositif d'activation" s'entend comme un dispositif configuré pour faire fonction d'interrupteur entre le microprocesseur et l'antenne. Plus précisément, ce dispositif est configuré pour activer la fonction sans contact de la carte lorsqu'une force externe, comme on le décrit plus loin, y est appliquée, et désactive la fonction sans contact lorsque la force externe est retirée. Il comporte un espaceur, un premier composant conducteur et un deuxième composant conducteur.

L'expression "composant conducteur" s'entend dans le présent document comme un composant électronique constitué d'un ou de plusieurs matériaux conducteurs, susceptible de conduire l'électricité dans un circuit fermé. Un composant conducteur peut comporter une (des) plot(s) de contact et/ou une (des) trace(s) conductrice(s) et/ou un (des) fil(s) de liaison et/ou une (des) électrodes(s).

De plus, l'expression "connecté(e)(s) à" ou le terme "connexion" s'entendent dans le présent document comme une connexion filaire, sans fil, directe, indirecte (par ex. par le biais d'une ou de plusieurs connexions intermédiaires) ou autre permettant la circulation d'un courant électrique entre deux composants électriques.

L'espaceur est en contact avec le périmètre du deuxième composant conducteur. L'espaceur est configuré pour former des parois latérales d'une cavité déformable au sein du dispositif d'activation. Le deuxième composant conducteur est configuré pour former au moins une partie de la surface soit de dessus, soit de dessous de la cavité.

Le « périmètre » d'un composant conducteur est ici défini par un contour du composant conducteur.

L'expression "parois latérales de la cavité" s'entend dans le présent document comme les parois latérales de la cavité, dont la (les) dimension(s) verticale(s) définit (définissent) la (les) hauteur(s) de la cavité dans le sens de l'épaisseur de la carte (c.-à-d. le sens du dessus au-dessous de la carte). Le deuxième composant conducteur peut être sensiblement parallèle à la surface de dessus ou de dessous de la carte.

La cavité présente un état normal et un état déformé. Au moins une partie de la cavité est configurée pour séparer le premier composant conducteur du deuxième composant conducteur lorsque la cavité occupe l'état normal. Les deux composants peuvent être en regard l'un de l'autre.

Lorsqu'une force externe au dispositif d'activation est appliquée sur le dispositif d'activation (typiquement lorsqu'un doigt d'un utilisateur exerce une pression sur la carte) pour déplacer le premier composant conducteur en direction du deuxième composant conducteur, la cavité est configurée pour passer de l'état normal à l'état déformé, et au moins une partie du premier composant conducteur est configurée pour pénétrer dans la cavité. Lorsque la cavité occupe l'état déformé, les premier et deuxième composants conducteurs viennent en contact électrique l'un avec l'autre pour établir une connexion électrique entre le microprocesseur et l'antenne.

En outre, lorsque la force externe cesse d'être appliquée (typiquement lorsque le doigt de l'utilisateur cesse d'exercer une pression sur la carte), la cavité est configurée pour reprendre son état normal, ce qui écarte le premier composant conducteur du deuxième composant conducteur pour rompre la connexion électrique. À titre d'exemple, l'espaceur est élastique, en fonctionnant à la manière d'un ressort.

Plus particulièrement, le microprocesseur et l'antenne se connectent chacun au premier composant conducteur ou au deuxième composant conducteur. À titre d'exemple, le microprocesseur est connecté à l'un des deux composants conducteurs, et l'antenne est connectée à l'autre. En variante, le premier composant conducteur comporte deux sous-composants conducteurs qui sont isolés électriquement lorsque la cavité occupe son état normal, un sous-composant se connectant au microprocesseur et un autre à l'antenne. Lorsque la cavité occupe l'état déformé et que les premier et deuxième composants conducteurs sont en contact, le deuxième composant conducteur est configuré pour former un pont électrique entre les deux sous-composants.

L'expression "lorsqu'une force externe cesse d'être appliquée" s'entend comme le moment précis où la force appliquée cesse, ou comme un instant ou une durée quelconque suivant le moment où la force n'est plus appliquée sur le dispositif d'activation de la carte.

À titre d'exemple, avant que la force soit appliquée sur le dispositif d'activation, la cavité occupe son état normal et présente une première forme. Lorsque la force externe est appliquée, la cavité subit une déformation, et finit par adopter une deuxième forme. Suite au retrait de la force externe, la cavité finit par reprendre une forme identique à la première forme ou légèrement différente de celle-ci.

À cet égard, le dispositif d'activation pourrait être normalement ouvert pour faire en sorte que le microprocesseur reste non opérationnel tant qu'un utilisateur n'applique pas une force sur la carte.

Le fait que l'espaceur configuré pour former des parois latérales de la cavité est en contact avec le périmètre du deuxième composant conducteur rend le dispositif d'activation compact.

En comparaison avec des conceptions antérieures, la configuration décrite ci-dessus procure une structure simplifiée, est facile à fabriquer, réduit les coûts de fabrication, est moins encombrante, et offre une plus grande stabilité et fiabilité.

Fournir une carte avec un espaceur en contact avec un périmètre du deuxième composant conducteur permet par exemple d'augmenter la surface du deuxième composant conducteur qui est au contact du premier composant conducteur lors de la déformation de la cavité.

Ceci permet par ailleurs une meilleure déformation de la cavité.

Dans une application pratique de l'invention, un utilisateur exerce une pression sur le dispositif d'activation, en amenant ainsi les premier et deuxième composants conducteurs au contact l'un de l'autre. Ceci établit une connexion électrique entre le microprocesseur et l'antenne, en permettant ainsi un transfert d'énergie de l'antenne au microprocesseur et en activant la fonction sans contact de la carte. Lorsque l'utilisateur relâche le dispositif d'activation (par ex. en retirant le doigt), le premier composant conducteur s'écarte du deuxième composant conducteur, en rompant ainsi la connexion et en désactivant la fonction sans contact.

Dans un exemple particulier qui est compatible avec tout autre exemple dans le présent document, le dispositif d'activation comporte en outre une couche non conductrice qui est configurée pour porter le premier composant conducteur. Ceci pourrait assurer une meilleure protection du premier composant conducteur contre l'endommagement.

De plus, la couche non conductrice et le deuxième composant conducteur peuvent être respectivement agencés sur des surfaces opposées de la cavité, en incorporant ainsi le premier composant conducteur dans la cavité. La distance entre le premier et le deuxième composant conducteur améliore la fiabilité du dispositif d'activation.

L'espaceur ne doit pas nécessairement s'étendre sur toute la surface de la cavité. Il peut recouvrir les surfaces extérieures du deuxième composant conducteur, plus précisément les surfaces qui ne sont pas au contact du premier composant conducteur lorsque la cavité occupe son état déformé, de manière à protéger le deuxième composant conducteur contre les facteurs environnementaux et à assurer une meilleure étanchéité de la cavité. De préférence, l'espaceur peut être pourvu d'une forme annulaire. Il peut être pris en sandwich entre le deuxième composant conducteur et la couche non conductrice, ou la partie principale de l'espaceur connecte le deuxième composant conducteur et la couche non conductrice tandis que ses extrémités s'étendent pour couvrir les bords extérieurs du deuxième composant conducteur et de la couche non conductrice.

Dans un autre exemple particulier qui est compatible avec tout autre exemple dans le présent document, la carte comporte un adhésif. Cet adhésif est susceptible d'entraver l'établissement du contact électrique entre les premier et deuxième composants conducteurs s'il adhère au premier composant conducteur ou à la surface intérieure du deuxième composant conducteur (c.-à-d. à la surface qui est en contact avec le premier composant conducteur lorsque la cavité occupe son état déformé). Pour remédier à ce problème, la cavité est rendue étanche, le premier composant conducteur est encapsulé au sein de la cavité, et l'espaceur ou la couche non conductrice est constituée d'un ou de plusieurs matériaux résistants à l'adhésif sous sa forme liquide ou sa forme solide.

Cette configuration du dispositif d'activation pourrait empêcher la corrosion ou la détérioration des premier et deuxième composants conducteurs par des contaminants, des produits chimiques, des sels, l'humidité, des adhésifs, etc.

À titre d'exemple, la carte contient un adhésif, une résine ou un film plastique en contact avec le dispositif d'activation. L'adhésif, la résine ou le film plastique peuvent comporter ou être constitués d'au moins un des éléments suivants : alkyde, acrylique, époxyde, polyester, phénolique, polycarbonate, polyamide, polyimide, polyuréthane, silicone, polyéthylène, polystyrène, polypropylène, vinylester, méthacrylate, cyanoacrylate, ou poly acétate de vinyle.

En conséquence, l'espaceur ou la couche non conductrice est constitué.e d'un (de) matériau(x) résistant(s) à l'adhésif, à la résine ou au film plastique sous leur forme liquide ou leur forme solide afin d'empêcher la pénétration de l'adhésif, de la résine ou du plastique dans la cavité. La cavité peut être rendue étanche par la couche non conductrice, l'espaceur et le deuxième composant conducteur.

Dans encore un autre exemple particulier qui est compatible avec tout autre exemple dans le présent document, chacun d'un ou de plusieurs éléments du dispositif d'activation est déformable et présente un état normal et un état déformé. Le(s) élément(s) comporte(nt) l'espaceur ou la couche non conductrice. La cavité est configurée pour occuper son état normal lorsque le(s) élément(s) occupe(nt) son (leur) état normal, et est configurée pour occuper son état déformé lorsque le(s) élément(s) occupe(nt) son (leur) état déformé.

Dans encore un autre exemple particulier qui est compatible avec tout autre exemple dans le présent document, l'espaceur est déformable et est configuré pour se comprimer (par ex. pour présenter une épaisseur réduite mesurée dans la direction de la force externe) lorsqu'il passe de son état normal à son état déformé. Ceci pourrait permettre aux utilisateurs de gérer plus facilement l'activation et la désactivation de la fonction sans contact ou de communication sans fil de la carte, tout en simplifiant également la structure de la carte.

Dans encore un autre exemple particulier qui est compatible avec tout autre exemple dans le présent document, la couche non conductrice est déformable et est configurée pour se déformer dans la direction de la force externe lorsque la force est appliquée sur le dispositif d'activation. La couche non conductrice peut être sensiblement parallèle à la surface de dessus ou de dessous de la carte dans son état normal. Cette configuration fait en sorte que la carte reste à plat en l'absence de forces externes, en la rendant ainsi plus pratique à emporter et en lui offrant une meilleure protection contre l'endommagement.

Dans encore un autre exemple particulier qui est compatible avec tout autre exemple dans le présent document, au moins une partie des un ou plusieurs éléments déformables du dispositif d'activation est élastique. L'au moins une partie du (des) élément(s) déformable(s) est configurée pour se déformer lorsque la force externe est appliquée sur le dispositif d'activation, et pour contribuer à écarter le premier composant conducteur du deuxième composant conducteur lorsque la force externe cesse.

À titre d'exemple, lorsque la force externe est appliquée sur le dispositif d'activation, elle provoque la déformation de l'au moins une partie du (des) élément(s) déformable(s) du dispositif d'activation, en amenant ainsi les premier et deuxième composants conducteurs au contact l'un de l'autre et en créant un pont électrique. L'application de la force ayant cessé, le(s) élément(s) déformable(s) reprend (reprennent) sa (leur) forme initiale, au moins en partie du fait de l'élasticité de l'au moins une partie. Au cours de ce processus, l'énergie potentielle emmagasinée dans l'au moins une partie se libère, en écartant ainsi le premier composant conducteur du deuxième composant conducteur et en rompant le pont électrique.

À titre d'exemple, une partie de l'espaceur ou de la couche non conductrice peut incorporer une structure de type ressort ou pourrait être constituée de matériaux élastiques tels qu'un caoutchouc naturel, un caoutchouc silicone, un silicone, du polychlorure de vinyle (ci-après "PVC"), du polystyrène, du polyéthylène, du néoprène, un gel diélectrique, ou un caoutchouc diélectrique.

Dans encore un autre exemple particulier qui est compatible avec tout autre exemple dans le présent document, la cavité est rendue étanche et est remplie de gaz. Le gaz est configuré pour contribuer à écarter le premier composant conducteur du deuxième composant conducteur lorsque la force externe cesse, en produisant ainsi un effet de ressort.

Le gaz peut être non corrosif, non adhésif et posséder des propriétés diélectriques ou d'isolation électrique. À titre d'exemple, le gaz peut être de l'air pur, ou des gaz inertes tels que l'azote, l'hélium et l'hexafluorure de soufre.

Dans encore un autre exemple particulier qui est compatible avec tout autre exemple dans le présent document, l'épaisseur du dispositif d'activation est supérieure ou sensiblement égale à l'épaisseur de l'antenne lorsque la cavité occupe son état normal. Ceci pourrait garantir une distance suffisamment grande entre le premier et le deuxième composant conducteur sans pour autant augmenter la taille de la carte.

Plus particulièrement, si l'antenne présente une épaisseur variable sur différents segments, l'épaisseur du dispositif d'activation peut être égale à l'épaisseur maximale de l'antenne.

En outre, l'antenne peut être une antenne inductive. L'épaisseur du dispositif d'activation peut être sensiblement égale à l'épaisseur de la bobine de l'antenne lorsque la cavité déformable occupe son état normal.

Dans encore un autre exemple particulier qui est compatible avec tout autre exemple dans le présent document, la couche non conductrice est constituée de polychlorure de vinyle (ci-après "PVC") et/ou de G10 et/ou de FR4 et/ou de polyamide et/ou de polyimide.

Dans encore un autre exemple particulier qui est compatible avec tout autre exemple dans le présent document, l'espaceur est constitué d'un ou de plusieurs matériaux notamment d'un élastomère, d'un caoutchouc diélectrique ou d'un gel diélectrique. Plus précisément, un gel diélectrique ou un caoutchouc diélectrique pourrait être utilisé comme composant gel dans l'espaceur, et être renfermé dans une enveloppe de protection constituée de matière élastomère ou de matière plastique comme un plastique polyimide ou uréthane.

À titre d'exemple, l'espaceur pourrait être constitué d'un caoutchouc silicone ou d'un caoutchouc uréthane sous forme de gel ou sous forme solide. L'élastomère peut être mou et mince. Il peut présenter une dureté comprise entre 00 et 35 sur l'échelle Shore 00.

Dans encore un autre exemple particulier qui est compatible avec tout autre exemple dans le présent document, la carte comporte en outre une couche métallique contenant le dispositif d'activation. Ceci pourrait faciliter le processus de fabrication de la carte métallique.

Plus précisément, la carte peut comporter un corps de carte métallique définissant une cavité. La cavité est équipée d'une surface continue définie par une surface intérieure du corps de carte métallique. L'antenne est logée à l'intérieur de la cavité. Le dispositif d'activation est configuré pour être positionné au sein d'une zone au moins en partie entourée par une bobine de l'antenne.

Dans encore un autre exemple particulier qui est compatible avec tout autre exemple dans le présent document, le dispositif d'activation peut être contenu dans l'antenne. Plus particulièrement, l'un et l'autre peuvent être préassemblés pour former un seul module afin de faciliter le processus de fabrication de la carte.

Dans encore un autre exemple particulier qui est compatible avec tout autre exemple dans le présent document, l'espaceur est diélectrique ou électriquement isolant afin d'améliorer la stabilité et la fiabilité du dispositif d'activation.

Dans encore un autre exemple particulier qui est compatible avec tout autre exemple dans le présent document, l'espaceur couvre au moins une partie d'une ou de plusieurs surfaces du premier composant conducteur. Ceci pourrait protéger le premier composant conducteur de l'environnement.

En outre, l'espaceur peut épouser une ou plusieurs surfaces du premier composant conducteur.

Dans encore un autre exemple particulier qui est compatible avec tout autre exemple dans le présent document, l'espaceur peut faire naturellement fonction d'adhésif du fait de sa tension superficielle.

Dans encore un autre exemple particulier qui est compatible avec tout autre exemple dans le présent document, au moins une partie de l'espaceur est prise en sandwich entre la couche non conductrice et le deuxième composant conducteur. L'épaisseur de cette au moins une partie de l'espaceur produit donc la cavité, qui pourrait être une poche de gaz.

Dans encore un autre exemple particulier qui est compatible avec tout autre exemple dans le présent document, la structure du dispositif d'activation est la suivante.

L'espaceur est équipé d'un trou traversant interne, dont les parois latérales forment les parois latérales de la cavité. Le deuxième composant conducteur et la couche non conductrice portant le premier composant conducteur sont situés au niveau/à proximité d'extrémités opposées du trou traversant. Le deuxième composant conducteur forme au moins en partie l'une des surfaces de dessous et de dessus de la cavité, et la couche non conductrice forme au moins en partie une autre des surfaces de dessous et de dessus de la cavité. En outre, l'espaceur adhère au deuxième composant conducteur et à la couche non conductrice ou à une (des) surface(s) latérale(s) du premier composant conducteur, ce qui rend la cavité étanche, en empêchant ainsi le premier composant conducteur et la surface intérieure du deuxième composant conducteur d'être exposés aux adhésifs contenus dans la carte ou utilisés lors de la fabrication de la carte.

Dans encore un autre exemple particulier qui est compatible avec tout autre exemple dans le présent document, le premier composant conducteur comporte deux traces conductrices, une connectée électriquement au microprocesseur et l'autre à l'antenne. Les deux traces conductrices sont isolées électriquement l'une de l'autre lorsque la cavité occupe son état normal. Lorsque la cavité occupe son état déformé et que le premier et le deuxième composant conducteur sont en contact, le deuxième composant conducteur est configuré pour former un pont électrique pour connecter les deux traces conductrices du premier composant conducteur.

À titre d'exemple, chacune des deux traces comporte une base principale et des protubérances s'étendant depuis la base principale. Les protubérances d'une des deux traces s'intercalent entre les protubérances d'une autre des deux traces. Cette structure particulière pourrait disperser la contrainte mécanique sur le premier composant conducteur, en minimisant ainsi le risque de fracture. Les protubérances peuvent être allongées et peuvent être fixées à la couche non conductrice. De plus, les traces peuvent être imprimées sur la couche non conductrice au moyen de la technologie des cartes de circuits imprimés (ci-après "PCB"), ce qui améliore la fiabilité de la connexion électrique et la compacité du dispositif d'activation. En outre, la carte PCB et l'antenne pourraient constituer un module préassemblé, en rationalisant ainsi le processus de fabrication. En guise d'exemple, dans le but d'assurer une connexion électrique fiable, la distance d'écartement entre des protubérances voisines peut être fixée au double de l'épaisseur de la trace. L'épaisseur de la trace est déterminée sur la base des spécifications de puissance électrique requises.

Dans encore un autre exemple particulier qui est compatible avec tout autre exemple dans le présent document, la carte comporte une incrustation. Le dispositif d'activation est configuré pour être reçu ou formé dans une cavité au sein de l'incrustation. Comme cela est connu dans l'art, l'incrustation comporte des couches individuelles contenant de l'électronique incorporée, qui comporte l'antenne et peut comporter en outre le microprocesseur. Ces couches sont fusionnées ensemble sous pression et chaleur au cours d'un processus de lamination, en formant ainsi une feuille ou un support unique durable. La couche métallique peut être contenue dans l'incrustation.

Selon un deuxième aspect, la présente invention présente un procédé de fabrication de la carte selon le premier aspect. Le procédé comporte un processus de fabrication du dispositif d'activation. Ce processus comporte une étape de formation de la cavité, qui comporte l'application d'un ou de plusieurs matériaux composant l'espaceur sur le périmètre du deuxième composant conducteur.

Dans un exemple particulier qui est compatible avec tout autre exemple dans le présent document, l'étape de formation de la cavité comporte en outre une étape d'application des un ou plusieurs matériaux sur une ou plusieurs surfaces latérales du premier composant conducteur ou sur le périmètre de la couche non conductrice.

L'espaceur peut comporter différentes couches constituées de différents matériaux qui sont superposées dans la direction allant du premier composant conducteur au deuxième composant conducteur de manière à augmenter la distance entre les deux composants conducteurs lorsque la cavité occupe son état normal. À titre d'exemple, l'espaceur peut être composé d'une couche de gel diélectrique et d'une couche constituée de polyimide superposées dans la direction verticale.

Dans un autre exemple particulier qui est compatible avec tout autre exemple dans le présent document, le procédé comporte en outre une étape d'application de couches d'adhésif, de résine ou de film plastique sur les surfaces de dessus et de dessous du dispositif d'activation.

Dans encore un autre exemple particulier qui est compatible avec tout autre exemple dans le présent document, le procédé comporte en outre une étape d'insertion du dispositif d'activation dans une cavité définie par une couche métallique. La cavité s'étend au travers des surfaces de dessus et de dessous de la couche métallique, en formant ainsi un trou traversant. L'étape d'application des couches d'adhésif, de résine ou de film plastique sur les surfaces de dessus et de dessous du dispositif d'activation comporte : l'application de ces couches sur les surfaces respectivement de dessus et de dessous de la couche.

Dans encore un autre exemple particulier qui est compatible avec tout autre exemple dans le présent document, le procédé comporte en outre une étape, en préassemblage, de mise en place d'une bobine de l'antenne autour du dispositif d'activation. Le premier composant conducteur est connecté à la bobine de l'antenne.

À cet égard, le préassemblage des différents éléments du dispositif d'activation et de l'antenne préalablement à leur insertion dans la carte ne modifierait pas les processus de fabrication de carte établis.

### BRÈVE DESCRIPTION DES DESSINS

Des modes de réalisation de l'invention ainsi que ses avantages vont être décrits ci-après de manière détaillée, à titre d'exemple, en référence aux dessins schématiques annexés se présentant comme suit.
La figure 1 illustre une antenne pour une carte sans contact de l'art antérieur.
La figure 2 est une vue en perspective schématique éclatée d'une carte équipée d'une interface sans contact conformément à divers modes de réalisation divulgués dans le présent document.
La figure 3 est un diagramme schématique du circuit de la carte conformément aux divers modes de réalisation.
La figure 4 est un exemple d'une vue de dessus d'un premier composant conducteur d'un dispositif d'activation dans la carte conformément aux divers modes de réalisation.
La figure 5a est une vue schématique en coupe du dispositif d'activation lorsqu'une cavité du dispositif d'activation occupe son état normal conformément aux divers modes de réalisation.
La figure 5b est une vue schématique en coupe du dispositif d'activation lorsque la cavité occupe son état déformé conformément aux divers modes de réalisation.
La figure 5c est un exemple d'une vue de dessous du dispositif d'activation conformément aux divers modes de réalisation.
La figure 6 est un organigramme d'un procédé de fabrication de la carte conformément à un deuxième mode de réalisation divulgué dans le présent document.

### DESCRIPTION DE MODES DE RÉALISATION PARTICULIERS

Divers aspects de l'invention vont être illustrés ci-après au travers de la description de modes de réalisation particuliers.

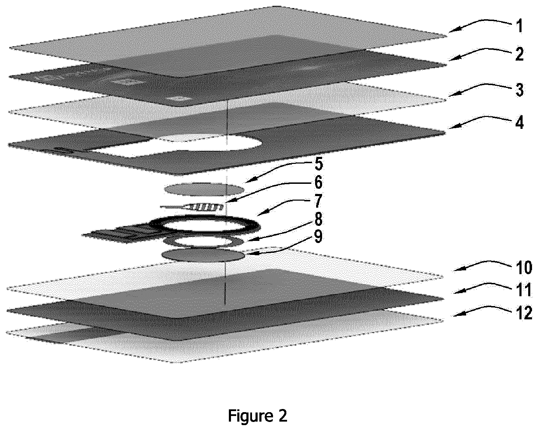

La figure 2 illustre un exemple d'une carte équipée d'une interface sans contact selon un premier mode de réalisation de l'invention. La carte peut être une carte de crédit à double interface.

La carte comporte une incrustation, qui comporte un corps de carte métallique 4 qui définit une cavité et une antenne inductive 7 logée à l'intérieur de la cavité. La carte comporte en outre un module à puce (non représenté). La cavité est pourvue d'une surface continue définie par une surface intérieure du corps de carte métallique 4, et s'étend au travers de la surface de dessus et de la surface de dessous du corps de carte métallique 4.

Le corps de carte métallique 4 peut être constitué d'acier inoxydable, ou de tout autre type de métal. La cavité peut être gravée chimiquement dans le corps de carte métallique 4. La carte comporte en outre une couche de recouvrement de dessus 1, une couche décorative de dessus 2, une couche en polymère de dessus (non représentée), et une couche adhésive de dessus 3 formant une série de couches superposées sur l'incrustation. De plus, la carte comporte une couche adhésive de dessous 10, une couche en polymère de dessous (non représentée), une couche décorative de dessous 11, et une couche de recouvrement de dessous 12 formant une série de couches superposées sous l'incrustation.

Les couches décoratives de dessus et de dessous 2 et 11 peuvent comporter des dessins tels qu'un logo ou des informations d'identification relatifs à l'émetteur de la carte ou au détenteur de la carte. Les couches de recouvrement de dessus et de dessous 1 et 12 sont des couches de protection, la couche de recouvrement de dessous 12 pouvant comporter une bande magnétique pour glisser la carte à travers un dispositif lecteur tel qu'un terminal de paiement. En outre, les couches de recouvrement 1 et 12 ainsi que les couches décoratives 2 et 11 peuvent être de couches en matière plastique, notamment mais pas exclusivement, en PVC ou polychlorure de vinyle/acétate de vinyle ("PVCA"). Les couches en polymère de dessus et de dessous peuvent être en PVC ou un composé à base d'époxyde. Les couches adhésives de dessus et de dessous 3 et 10 peuvent être constituées de résine ou autres adhésifs. La résine peut être une résine durcissable, notamment mais pas exclusivement, des résines à groupements ester, des résines acétaliques, des résines de coulée, des résines imprégnées, des résines insaturées, des résines saturées, de l'acrylate d'uréthane, de l'acrylate de silicone, de l'époxy-acrylate, du méthacrylate, de l'acrylate, ou de l'uréthane. Les couches en polymère et les couches adhésives peuvent être totalement ou partiellement transparentes.

La carte comporte en outre un dispositif d'activation logé à l'intérieur de la cavité, entouré par la bobine de l'antenne 7. Le dispositif d'activation comporte, du dessus au dessous, un disque non conducteur déformable 5, une matrice de traces conductrices 6 (c.-à-d. le premier composant conducteur) adhérant au disque non conducteur 5, un espaceur déformable 8 adhérant au disque non conducteur 5 et à un disque conducteur 9 opposé au disque non conducteur 5, entre lesquels il est pris en sandwich, et le disque conducteur 9 (c.-à-d. le deuxième composant conducteur). L'espaceur déformable 8, pourvu d'une forme annulaire, conjointement avec le disque non conducteur 5 et le disque conducteur 9, créent ensemble une cavité étanche qui contient un fluide, de préférence de l'air.

L'espaceur 8 et le disque non conducteur 5 occupent leur état normal lorsqu'aucune force externe n'est appliquée pour exercer une pression sur le disque non conducteur 5, et commencent à se déformer lorsqu'une force externe commence à exercer une pression sur le disque non conducteur 5. La matrice de traces conductrices 6 et le disque conducteur 9 sont séparés lorsque l'espaceur 8 et le disque non conducteur 5 occupent leur état normal. Le disque conducteur 9 peut être au contact de l'antenne 7 et assujetti à celle-ci. L'épaisseur du dispositif d'activation est égale à l'épaisseur de l'antenne 7 à l'état normal de l'espaceur 8 et du disque non conducteur 5. Le disque non conducteur 5 est constitué de polyimide, le disque conducteur 9 et l'antenne 7 sont constitués du même matériau, et la matrice de traces conductrices 6 est constituée de cuivre.

Une région particulière dans chacune des couches de recouvrement de dessus 1, couche décorative de dessus 2 et couche en polymère de dessus qui correspond à la position du dispositif d'activation dans l'incrustation est constituée d'un ou de plusieurs matériaux déformables. Cette région peut être indiquée à l'aide de texte, de graphiques, ou d'une forme tridimensionnelle distinctive dans la couche de recouvrement de dessus 1 et/ou la couche décorative de dessus 2. À titre d'exemple, la couche de recouvrement de dessus 1 peut comporter une région qui fait saillie, correspondant à l'emplacement du dispositif d'activation. Cette région protubérante peut être enfoncée par l'utilisateur pour provoquer la compression de l'espaceur 8 du dispositif d'activation et l'enfoncement du disque non conducteur 5.

Le module à puce peut être d'un type quelconque. Le module à puce comporte habituellement une puce, un substrat et des plots de contact externes, superposés séquentiellement de bas en haut. La puce comporte un microprocesseur et une unité de stockage en mémoire, et est configurée pour le stockage et la récupération, le chiffrement, l'authentification de données, ainsi que d'autres fonctions nécessaires au transfert et à l'authentification de données. Les plots de contact externes sont exposés à l'environnement externe, pour permettre à la carte de s'interfacer avec des lecteurs de cartes.

Comme on peut l'apprécier, bien que la connexion de circuit entre le microprocesseur et l'antenne 7 soit rompue lorsqu'aucune pression n'est exercée sur le dispositif d'activation, une extrémité du microprocesseur et une extrémité de l'antenne 7 demeurent physiquement connectées en permanence, ce qui permet un rétablissement rapide de la connexion dès qu'une pression est exercée sur le dispositif d'activation. La connexion entre une extrémité du microprocesseur et une extrémité de l'antenne 7 peut se conformer à une pratique établie quelconque. En guise d'exemple, une extrémité du microprocesseur, contenue dans la puce, est connectée à une extrémité de l'antenne 7 de la carte via un point de connexion (portant également le nom de plot) sur le substrat.

De plus, le microprocesseur dans la puce et la matrice de traces conductrices 6a sont connectés électriquement, par exemple soit par un fil soit par une trace traversant un via ménagé à travers le disque non conducteur 5, et un autre point de connexion sur le substrat. L'antenne 7 et la matrice de traces conductrices 6b peuvent également être connectées électriquement d'une manière analogue. Dans un souci de rationalisation du processus de fabrication, le substrat peut constituer le noyau non conducteur de l'antenne.

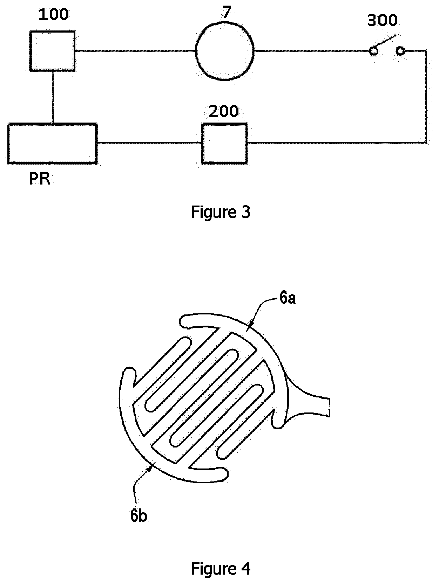

La figure 3 est un diagramme schématique du circuit de la carte décrit plus haut selon le premier mode de réalisation, où les points de connexion sur le substrat sont illustrés sous forme de plots de contact 100 et 200.

La carte est apte à fonctionner aussi bien en mode à contact qu'en mode sans contact. En mode à contact, la carte communique avec un lecteur par le biais des plots de contact exposés du module à puce. Une fois insérées dans un lecteur de cartes, ces plots de contact touchent physiquement des contacts correspondants dans le lecteur. Le lecteur fournit alors une tension à l'un de ces plots de contact, en alimentant ainsi la puce.

En mode sans contact, en revanche, la carte communique avec un lecteur sans contact au moyen d'ondes RF. Lorsque la carte est amenée à proximité du lecteur, le champ RF émanant du lecteur induit une tension dans l'antenne 7. Comme l'illustre la figure 3, la mise en conduction du dispositif d'activation 300 fera passer un courant de l'antenne 7 au microprocesseur PR, en activant ainsi la fonction sans contact. La fonction sans contact sera sinon désactivée.

Un exemple de la matrice de traces conductrices 6 est montré sur la figure 4. Dans cet exemple, la matrice de traces conductrices 6 comporte deux traces conductrices distinctes et séparées 6a et 6b. Chacune des deux traces 6a et 6b comporte une base principale et des protubérances allongées s'étendant depuis la base principale. Les protubérances d'une des deux traces s'intercalent entre les protubérances d'une autre des deux traces. Comme le montre la figure 4, les protubérances des deux traces 6a et 6b s'alignent sans entrer en contact physique. La base principale de la trace 6a est configurée pour être connectée au microprocesseur et la base principale de la trace 6b est configurée pour être connectée (non montré) à l'antenne 7.

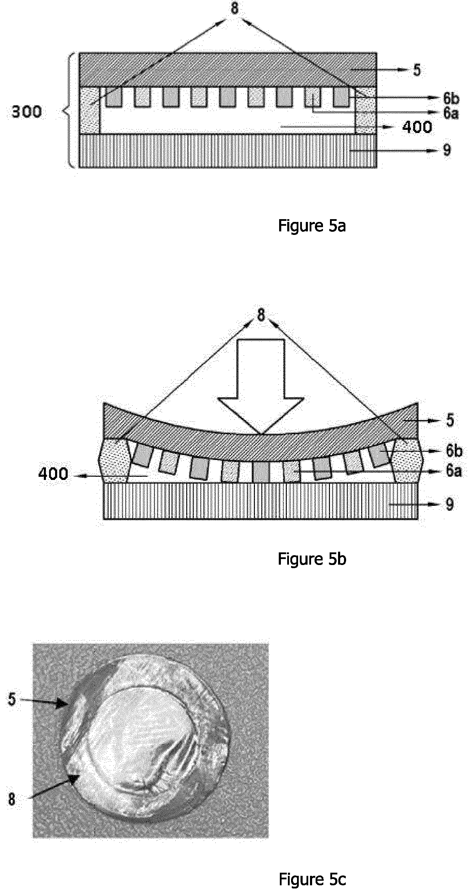

Les figures 5a et 5b sont des vues schématiques en coupe du dispositif d'activation 300 lorsque l'espaceur 8 occupe respectivement l'état normal et l'état déformé. La figure 5c est un exemple d'une vue de dessous du dispositif d'activation.

Dans le premier mode de réalisation, l'espaceur 8 sépare le disque non conducteur 5 du disque conducteur 9. Plus précisément, comme l'illustrent les figures 2 et 5a à 5c, l'espaceur 8 comporte un trou traversant, dont les parois latérales forment les parois latérales d'une cavité, et le disque non conducteur 5 et le disque conducteur 9 sont positionnés aux extrémités opposées du trou traversant pour former les surfaces respectivement de dessus et de dessous de la cavité. La cavité est rendue étanche par le disque non conducteur 5, l'espaceur 8 et le disque conducteur 9. Comme l'illustrent les figures 5a et 5b, de l'air est piégé au sein de la cavité (poche d'air 400).

La matrice de traces conductrices 6 est incorporée dans la cavité, sa surface supérieure étant fixée à la surface de dessous du disque non conducteur 5 et couverte par celle-ci. Plus particulièrement, la matrice de traces conductrices 6 est imprimée sur le disque non conducteur 5 au moyen de la technologie PCB.

L'espaceur 8 et le disque non conducteur 5 sont constitués d'un ou de plusieurs matériaux non adhésifs et déformables qui sont diélectriques ou électriquement isolants. Les un ou plusieurs matériaux sont résistants aux couches adhésives. Les un ou plusieurs matériaux peuvent être élastiques (par ex. un caoutchouc silicone diélectrique pour l'espaceur) ou présenter une faible élasticité (par ex. un gel diélectrique pour l'espaceur). La figure 5c illustre la vue de dessous du dispositif d'activation selon un exemple. L'espaceur 8 comporte une couche de gel diélectrique. La forme annulaire de l'espaceur 8 est nettement visible sur la figure 5c. Une pression est exercée sur le dispositif d'activation sur la figure 5c, où une partie du bouton est vue du dessous, à l'opposé du côté sur lequel la pression est exercée.

Des exemples de matériaux composant la couche non conductrice 5 comprennent du FR4, du G10, du polyimide et du polyamide.

Lorsqu'un utilisateur enfonce la région déformable sur la couche de recouvrement de dessus 1 qui correspond à l'emplacement du dispositif d'activation, la force est transférée au dispositif d'activation, pour faire ainsi pénétrer la matrice de traces conductrices 6 dans la cavité. Dans l'exemple illustré sur la figure 5b, la force finit par amener l'une des protubérances allongées de la trace 6a et l'une des protubérances allongées de la trace 6b au contact électrique du disque conducteur 9, en formant ainsi un pont électrique entre les deux traces 6a et 6b. Le microprocesseur et l'antenne 7 sont donc connectés électriquement. Comme l'illustre la figure 5b, la force provoque également la déformation de l'espaceur 8 et du disque non conducteur 5 et la redistribution ou la compression de l'air au sein de la cavité.

Dès lors que l'utilisateur cesse d'exercer une pression, l'air reprend sa position initiale au sein de la cavité, si bien que l'espaceur 8 et le disque non conducteur 5 subissent une déformation inverse et que la matrice de traces conductrices 6 s'écarte du disque conducteur 9.

Si l'espaceur et/ou le disque non conducteur 5 sont/est élastiques/élastique, cette élasticité leur/lui fera également reprendre leur/sa forme initiale et écartera la matrice de traces conductrices 6 du disque conducteur 9.

La matrice de traces conductrices 6 peut être constituée de cuivre, d'or ou d'étain, et présenter une épaisseur minimale de 10 µm de façon à éviter l'atténuation de la fonction de communication radiofréquence de la carte.

Des exemples d'épaisseurs d'autres couches de la carte sont les suivants.

La couche de recouvrement de dessus 1 est d'environ 45 à 60 µm, la couche décorative de dessus 2 est d'environ 127 à 145 µm, la couche adhésive de dessus 3 et la couche en polymère de dessus combinées sont d'environ 30 à 40 µm, la couche métallique 4 est d'environ 330 µm, le disque non conducteur 5 est d'environ 75 µm, l'antenne 7 est d'environ 300 µm, le disque conducteur 9 est d'environ 100 à 120 µm, la couche adhésive de dessous 10 et la couche en polymère de dessous combinées sont d'environ 40 à 50 µm, la couche décorative de dessous 11 est d'environ 127 à 145 µm, et la couche de recouvrement de dessous 12 est d'environ 45 à 60 µm.

Bien qu'ils soient représentés sous forme de disques ronds 5 et 9 sur la figure 2, les premier et deuxième composants conducteurs peuvent prendre d'autres formes. Par souci de fiabilité et de simplicité, ils peuvent être pourvus de la même forme et de la même taille. Dans cet exemple particulier, le dispositif d'activation fonctionne comme un bouton. Lorsque l'utilisateur enfonce le bouton, la fonction sans contact de la carte est activée. Lorsqu'il relâche le bouton, la fonction sans contact est désactivée.

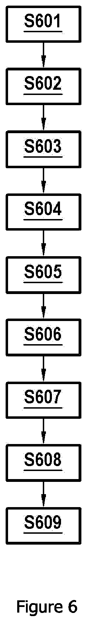

La figure 6 illustre le flux d'un exemple d'un procédé de fabrication de la carte selon un deuxième mode de réalisation de l'invention.

À l'étape S601, un gel diélectrique est appliqué sur le périmètre du disque non conducteur 5 et le périmètre du disque conducteur 9 pour créer une cavité étanche entre les deux disques 5 et 9. Le disque non conducteur 5 a été préfabriqué, la matrice de traces conductrices 6 y ayant déjà été fixée à l'issue du processus de préfabrication. L'une des traces 6a et 6b est déjà connectée à l'antenne 7, et une autre des traces est déjà connectée au microprocesseur. De manière analogue, le disque conducteur 9 a été préfabriqué.

Plus particulièrement, le gel diélectrique adhère à des surfaces latérales des traces 6a, 6b et forme une structure en sandwich de l'espaceur 8 entre le disque non conducteur 5 et le disque conducteur 9. L'épaisseur du gel diélectrique produit une poche d'air qui sépare les traces 6a, 6b du disque conducteur 9 lorsqu'aucune pression n'est exercée sur le dispositif d'activation.

À l'étape S602, un adhésif est appliqué sur la couche en polymère de dessous, laquelle est placée sur la table d'une machine adhésive.

À l'étape S603, le corps de carte métallique 4 est placé sur la couche adhésive de dessous 10 formée à l'issue de l'étape S602, et le dispositif d'activation et l'antenne 7 sont insérés dans le corps de carte métallique, la bobine de l'antenne 7 entourant le dispositif d'activation.

À l'étape S604, un adhésif est appliqué sur les surfaces de dessus du corps de carte métallique 4 et des composants qui y sont insérés.

À l'étape S605, la couche en polymère de dessus est placée sur la couche adhésive de dessus 3 formée à l'issue de l'étape S604.

Les étapes S602 à S605 font partie de la phase de prélamination. Une phase de prélamination secondaire pourrait lui succéder. À l'étape S606, les couches décorative et de recouvrement de dessus 2 et 1 sont placées au-dessus de la couche en polymère de dessus, et les couches décorative et de recouvrement de dessous 11 et 12 sont placées sous la couche en polymère de dessous.

À l'étape S607, un vernis est ajouté aux surfaces de dessus et de dessous des couches.

À l'étape S608, un module à puce est incorporé dans la carte.

À l'étape S609, la carte est personnalisée et soumise à des tests de contrôle de qualité de façon à en garantir le bon fonctionnement et la sécurité.

Pour plus de détails sur le processus de fabrication, on se reportera à la demande de brevet des États-Unis n° 18084039, incorporée par renvoi au présent document.

## Revendications

1. Carte équipée d'une interface sans contact, la carte comprenant un dispositif d'activation, un microprocesseur et une antenne (7), le dispositif d'activation comprenant :
un premier composant conducteur (6) ;
un deuxième composant conducteur (9) ; et
un espaceur (8) en contact avec un périmètre du deuxième composant conducteur (9),
le microprocesseur et l'antenne (7) étant chacun connectés au premier composant conducteur (6) ou au deuxième composant conducteur (9),
l'espaceur (8) étant configuré pour former des parois latérales d'une cavité déformable au sein du dispositif d'activation, et le deuxième composant conducteur (9) étant configuré pour former au moins une partie d'une surface soit de dessus soit de dessous de la cavité ;
la cavité présentant un état normal et un état déformé, et au moins une partie de la cavité étant configurée pour séparer le premier composant conducteur (6) du deuxième composant conducteur (9) lorsque la cavité est dans l'état normal ;
lorsqu'une force externe au dispositif d'activation est appliquée sur le dispositif d'activation pour déplacer le premier composant conducteur (6) en direction du deuxième composant conducteur (9), la cavité étant configurée pour passer de l'état normal à l'état déformé, et au moins une partie du premier composant conducteur (6) étant configurée pour pénétrer dans la cavité, en formant ainsi un contact électrique avec le deuxième composant conducteur (9) lorsque la cavité est dans l'état déformé pour établir une connexion électrique entre le microprocesseur et l'antenne (7) ; et
lorsque la force externe cesse d'être appliquée, la cavité est configurée pour reprendre son état normal, en écartant ainsi le premier composant conducteur (6) du deuxième composant conducteur (9) pour rompre la connexion électrique.

2. Carte selon la revendication 1, dans laquelle le dispositif d'activation comprenant en outre :
une couche non conductrice (5) maintenant le premier composant conducteur (6).

3. Carte selon la revendication 2, la couche non conductrice (5) et le deuxième composant conducteur (9) étant respectivement agencés sur des surfaces opposées de la cavité ; ou,
la couche non conductrice (5) étant constituée de FR4 et/ou de G10 et/ou de polyimide et/ou de polyamide.

4. Carte selon l'une quelconque des revendications 1 à 3, comprenant en outre un adhésif, le premier composant conducteur (6) étant encapsulé au sein de la cavité, la cavité étant rendue étanche, et l'espaceur (8) étant constitué d'un ou de plusieurs matériaux résistants à l'adhésif.

5. Carte selon l'une quelconque des revendications 1 à 4, dans laquelle au moins un élément du dispositif d'activation est déformable et présente un état normal et un état déformé,
l'au moins un élément comprenant l'espaceur (8) ou une couche non conductrice (5) configurée pour porter le premier composant conducteur (6), et
la cavité étant configurée pour occuper son état normal lorsque l'au moins un élément occupe son état normal, et étant configurée pour occuper son état déformé lorsque l'au moins un élément occupe son état déformé.

6. Carte selon la revendication 5, dans laquelle au moins une partie de l'au moins un élément est élastique, et est configurée pour se déformer lorsque la force externe est appliquée sur le dispositif d'activation, et pour contribuer à écarter le premier composant conducteur (6) du deuxième composant conducteur (9) lorsque la force externe cesse ; ou
carte selon l'une quelconque des revendications 1 à 5, dans laquelle la cavité est étanche et remplie de gaz, et le gaz est configuré pour contribuer à écarter le premier composant conducteur (6) du deuxième composant conducteur (9) lorsque la force externe cesse.

7. Carte selon l'une quelconque des revendications 1 à 6, dans laquelle
- l'épaisseur du dispositif d'activation est supérieure ou égale à l'épaisseur de l'antenne (7) lorsque la cavité occupe son état normal, ou
- l'espaceur (8) est constitué d'un ou de plusieurs matériaux comprenant un élastomère ou un gel diélectrique.

8. Carte selon l'une quelconque des revendications 1 à 7,dans laquelle la carte comprenant une couche métallique (4) contenant le dispositif d'activation, ou, le dispositif d'activation étant contenu dans l'antenne (7).

9. Carte selon l'une quelconque des revendications 1 à 8, dans laquelle
- l'espaceur (8) étant diélectrique ou électriquement isolant, ou,
- au moins une partie de l'espaceur (8) étant prise en sandwich entre le deuxième composant conducteur (9) et une couche non conductrice (5) portant le premier composant conducteur (6) ; ou,
- l'espaceur (8) couvrant au moins une partie d'une ou de plusieurs surfaces du premier composant conducteur (6).

10. Carte selon l'une quelconque des revendications 1 à 9, dans laquelle le premier composant conducteur (6) comprend deux traces conductrices (6a, 6b), une connectée électriquement au microprocesseur et une autre à l'antenne (7), et les deux traces conductrices (6a, 6b) sont électriquement isolées l'une de l'autre lorsque la cavité occupe son état normal.

11. Carte selon l'une quelconque des revendications 1 à 10, dans laquelle la carte est une carte compatible avec l'identification radiofréquence "RFID".

12. Procédé de fabrication de la carte selon l'une quelconque des revendications 1 à 11, comprenant un processus de fabrication du dispositif d'activation, le processus comprenant :
la formation de la cavité par application d'un ou de plusieurs matériaux composant l'espaceur (8) sur le périmètre du deuxième composant conducteur (9).

13. Procédé selon la revendication 12, dans lequel la formation de la cavité comprend en outre :
l'application des un ou plusieurs matériaux sur une ou plusieurs surfaces latérales du premier composant conducteur (6) ou sur un périmètre d'une couche non conductrice (5) portant le premier composant conducteur (6).

14. Procédé selon la revendication 12 ou 13, comprenant en outre :
l'application de couches (3, 10) d'adhésif, de résine ou de film plastique sur une surface de dessus et une surface de dessous du dispositif d'activation.

15. Procédé selon la revendication 14, comprenant en outre :
l'insertion du dispositif d'activation dans une cavité définie par une couche métallique, la cavité s'étendant au travers d'une surface de dessus et d'une surface de dessous de la couche métallique, l'application des couches d'adhésif, de résine ou de film plastique sur la surface de dessus et la surface de dessous du dispositif d'activation comprenant :
l'application des couches d'adhésif, de résine ou de film plastique sur les surfaces respectivement de dessus et de dessous de la couche métallique.
